# EUROPEAN PATENT APPLICATION

(11) **EP 1 494 306 A1**
(43) Date of publication of application: **05.01.2005**
(21) Application number: 04014501.3
(22) Date of filing: 21.06.2004
(51) Int. Cl.: H01M 8/04, H01M 8/24

(54) **Fuel cell and fuel cell stack**

(30) Priority: 24.06.2003 JP 2003179577
(71) Applicant: MATSUSHITA ELECTRIC INDUSTRIAL CO., LTD., Kadoma-shi, Osaka 571-8501 (JP)
(72) Inventor: Kusakabe, Hiroki, Sakai-shi Osaka 590-0113 (JP); Hatoh, Kazuhito, Osaka-shi Osaka 536-0015 (JP); Ohara, Hideo, Osaka 576-0016 (JP); Takeguchi, Shinsuke, Osaka-shi Osaka 538-0052 (JP); Shibata, Soichi, Hirakata-shi Osaka 573-1149 (JP); Tomizawa, Takeshi, Ikoma-shi Nara 630-0123 (JP); Matsumoto, Toshihiro, Takatsuki-shi Osaka 569-1144 (JP); Yasumoto, Eiichi, Soraku-gun Kyoto 619-0238 (JP)
(74) Representative: Patentanwälte Leinweber & Zimmermann

(57) **Abstract**

The invention refers to a fuel cell comprising a passageway for a cooling medium, said passageway comprising a cooling medium inlet, a cooling medium flow channel and a cooling medium outlet.

According to the invention, there is no portion of said flow channel having a downstream part higher than an upstream part thereof.

## Description

### BACKGROUND OF THE INVENTION

### 1. FIELD OF THE INVENTION

This invention relates to a fuel cell, in particular a polymer electrolyte fuel cell employing a polymer electrolyte used for a portable power supply, an electric vehicle power supply, and a cogeneration system for home and the like.

### 2. DESCRIPTION OF RELATED ART

A fuel cell employing a polymer electrolyte produces electric power and heat simultaneously by making fuel gas containing hydrogen, and oxidizing gas containing oxygen such as air and the like reacting electrochemically. This fuel cell, basically, consists of a polymer electrolyte membrane that selectively transports hydrogen ions, and a pair of electrodes, i.e., an anode and a cathode, formed on both sides of a polymer electrolyte membrane. The aforementioned electrodes chiefly consist of carbon powder used to support a platinum-group metal catalyst, and comprise of a catalyst layer formed on the surface of a polymer electrolyte membrane, and a gas diffusion layer, which has both of a permeability and an electron conductivity combined, formed on the exterior surface of a catalyst layer.

A gas sealing material and a gasket are arranged over the edge of a polymer electrolyte membrane in a way that electrodes are formed on both sides of the polymer electrolyte membrane excluding the edge portion thereof respectively, surrounding each electrode, in order to prevent the fuel gas and oxidizing gas supplied to the electrodes from leaking out and to prevent two gases from being mixed together. These gas sealing materials and gaskets are assembled together in advance integrating with electrodes and a polymer electrolyte membrane. This is called MEA (membrane-electrode assembly).

For both sides of the MEA, conductive separators with which to electrically connect the MEA serially to the adjacent MEA as well as to fix the MEAs mechanically are arranged. Gas passageways/flow channels, through which to supply reactant gas to an electrode surface, as well as to carry away produced water and surplus gas, are formed on the separator portion where MEAs come in contact with the separators. Although the gas passageways/flow channels may be provided independent from the separators, it is a common method to cut grooves (slots) on the surface of the separators as the gas passageways/flow channels.

The supply of reactant gas to these gas passageways as well as the emission of react gas/produced water from the gas passageways are carried out by: providing a through-hole referred to as a manifold opening on the separator; communicating the gateways of the gas passageways with this manifold opening; and distributing the reactant gas to each gas passageway through the manifold opening. Since a fuel cell generates heat during operation, the fuel cell should be cooled with a cooling medium, such as cooling water to ensure that cells are maintained at a good operating temperature. Generally, a cooling section is provided for every 1 - 3 cells. The steps of the common structure of stacked cells are: stacking these MEAs, separators and cooling sections alternatively up to 10 - 200 cells high; sandwiching the stacked cells in between end plates through the intermediary of a collecting plate and an insulating plate; and finally fixing the sandwiched unit from both ends with tightening rods.

As for materials for a polymer electrolyte membrane for this type of cell, primarily materials from perfluorosulfonic acid family have been commonly used. Since this polymer electrolyte membrane develops ion conductivity when containing water, it is generally required for fuel gas and oxidizing gas to be humidified before supplying them to the cell. Moreover, since water is produced at the cathode side due to chemical reactions, cell performance problems including the instability and deteriorations of cell performance have been observed due to a clogged drain etc., triggered by condensation formed on the gas passageways in cells and in electrodes when gas humidified to the dew-point temperature higher than the cell operating temperature is supplied to the cells. Generally, the phenomenon developing the deteriorations and instability of cell performance as described above is referred to as the flooding phenomenon. On the other hand, the system formulation including the humidification process of supply gas is required when a fuel cell is used for a power generation system. It is preferable to lower the dew-point temperature of humidified gas supplied even if only slightly, in order to simplify the system and to improve system efficiency.

As described above, it has been a common practice to supply the supply gas humidified to the dew-point temperature slightly lower than cell temperature from the aspects of flooding phenomenon preventions, system efficiency improvement, and system simplifications etc. However, the ion conductivity of a polymer electrolyte membrane needs to be improved for the higher performance of cell, for which it is desirable to supply the supply gas humidified to near 100% relative humidity or higher than 100% relative humidity.

Moreover, it has been shown that it is preferable to supply the supply gas humidified to a higher level even from the aspect of the durability of a polymer electrolyte membrane. However, the development of previously described flooding phenomenon becomes problematic when attempting to supply gas humidified to near 100% relative humidity. To put it simply, the flooding phenomenon cannot be prevented adequately by adjusting the humidity of supply gas.

On the other hand, it is known that the method in which the condensed water is blown off by increasing the flow rate of supply gas in the separator flow channels is effective, in order to avoid the flooding phenomenon. However, in order to increase the supply gas flow rate, the gas needs to be supplied at high pressure, which in turn, in the event of system formulation, necessitates to significantly increase the power for auxiliary machines such as a gas supply blower or compressor etc. resulting in the lower system efficiency.

Moreover, the development of flooding phenomenon on the anode side can cause lack of fuel gas, which is detrimental to the cells. This is due to the carbon, which supports an anode catalyst to produce electrons and protons, reacts with water in ambient air under the condition of no fuel gas, when load current is forcibly taken away under the condition of lacking fuel gas. As a result, the anode catalyst layer is destroyed by the elution of carbon.

Moreover, with the system equipped with stacked cells, from the view of merchantability, it is essential that the cells can be operated not only in rated output power condition but also in low load condition holding down the power according to power requirements. During low load operation, in order to maintain efficiency, the utilization rate of fuel gas and oxidizing gas should be set at the same condition as the rated operation. In other words, contrary to rated operation, for example, when the load is reduced to 1/2 without reducing the flow volume of fuel gas and oxidizing gas, the excess fuel gas and oxidizing gas are used and therefore the power generation efficiency decreases. However, when the gas utilization rate was maintained constant during low load operation, the gas flow rate in gas passageways did decline, and flocculated water and produced water could no longer be emitted to the outside of the separator, which in turn caused problems such as the development of flooding phenomenon as described above, the deteriorations and instability of cell performance, and etc.

Moreover, it is known that if there is any segment where gas in gas passageways flows in the direction of gravitational force exists, flocculated water and produced water stay at that segment and flooding phenomenon like this tends to be easily developed. As a countermeasure for this, methods that allow oxidizing gas or fuel gas to flow only in the direction of gravitational force have been suggested (see Japanese Published Unexamined Patent Applications JP, H11-233126A and JP, 2001-068131A). According to these methods, the smooth emission of flocculated water and produced water as well as the suppression of the development of flooding can be accomplished by ensuring the flows of oxidizing gas or fuel gas in the direction of gravitational force.

### SUMMARY OF THE INVENTION

Incidentally, the relative humidities of oxidizing gas and fuel gas generally increase when approaching the cell outlet or in the downstream where the gas volume decreases and the amount of produced water increases. Furthermore, when the relative humidity exceeds 100%, it turns into flocculated water increasing the volume of water. On the contrary, cooling water temperature is lowest at the inlet part and increases toward the outlet part. As described previously, it is necessary that supply gas humidified close to 100% relative humidity be provided to the cells. Generally, this cooling water flows in the principal plane opposite side of a principal plane where the reactant gas of a separator flows, by which a heat generating electrode portion is cooled through the separator. Here, if cooling water is flowed in the opposite direction from the flow of reactant gas, the reactant gas humidified to 100% relative humidity needs to be supplied to high temperature cooling water. This humidifying water supplied in abundant volume turns into flocculated water at reactant gas downstream where the temperature of cooling water is low, and flooding phenomenon tends to be easily developed due to a clogged drain etc. Furthermore, in an actual cogeneration system, when supply gas is humidified using cooling water, humidifying temperature cannot be increased to the same temperature as the outlet temperature of cooling water. As a result, reactant gas cannot be supplied at 100% relative humidity and dryness develops on a polymer electrolyte membrane at the gas inlet part, resulting in a problem such as the worsening of durability.

Moreover, when this cooling water is supplied to a layered stack flowing from the upper side to downward in the direction of gravitational force, the cooling water following the direction of gravitational force is diverted into each cooling water inlet through the inlet manifold opening of cooling water, and therefore more cooling water flows into cells closer to the inlet piping leading to the manifold opening of cooling water, and as a result the isostery of cooling water is worsened. In particular, as the calorific value by power generation reaction declines during part load operation, it is necessary to reduce the flow volume of cooling water to maintain the temperatures of cells, by which a problem such as the worsening of durability further develops.

In order to solve the above problems, the present invention provides a fuel cell comprising a passageway for a cooling medium, said passageway comprising a cooling medium inlet, a cooling medium flow channel and a cooling medium outlet, characterized in that there is no portion of said flow channel having a downstream part higher than an upstream part thereof.

In other words, the cooling medium is made to flow only horizontally or with a downward component, but never in an upward direction.

Preferably, the fuel cell comprises a passageway for an oxidizing gas, said passageway comprising an oxidizing gas inlet, an oxidizing gas flow channel and an oxidizing gas outlet, characterized in that there is no portion of said oxidizing gas flow channel having a downstream part higher than an upstream part thereof.

The same applies, mutatis mutandis, to a fuel gas passageway.

According to a particularly preferred embodiment of the invention, at least one of said cooling medium, fuel gas and oxidizing gas flow channels comprises a horizontal portion, a vertical portion and/or a downslope portion.

Furthermore, the invention provides for a fuel cell comprising a passageway for a cooling medium, said passageway being at least partly positioned to overlap a fuel gas passageway and/or an oxidizing gas passageway, as seen in the through-thickness direction.

Thereby, certain advantages are achieved.

Particularly, said cooling medium passageway is designed to at least partially provide a counterflow cooling of said oxidizing gas and/or of said fuel gas with view to the horizontal direction.

In other words, a counterflow cooling is achieved although neither one of said passageways has a portion leading in the upward direction.

Moreover, the invention provides for a fuel cell comprising a passageway for a cooling medium, characterized in that an upstream portion of a fuel gas passageway and/or an upstream portion of an oxidizing gas passageway is positioned in the proximity of an inlet portion of said cooling medium passageway.

This embodiment of the invention provides for certain advantages as regards humidification of the oxidizing gas and/or the fuel gas.

The invention includes a fuel cell comprising a passageway for a cooling medium, said passageway comprising a branch for branching into 2 or more sub-passageways, characterized by barrier means between an upstream portion of said branch and a downstream portion of said branch.

Such a barrier means serves for distributing the cooling medium more evenly to the 2 sub-passageways. Namely, when supplying said cooling medium to said upstream portion, the upstream portion will be filled with the cooling medium because of the barrier and passing the barrier results in a more even distribution of the cooling medium with view to the 2 or more sub-passageways.

Preferably, said barrier means comprise a bottleneck portion.

Said barrier means comprises preferably a rib on the bottom between said upstream and downstream portions. What is achieved by said feature is that the downstream portion will be filled with the cooling medium because of the rib.

Alternatively or additionally, what can be provided according to the invention is that said downstream portion is positioned on a higher level than said upstream portion.

Once more, in this case the upstream portion will be filled with the cooling medium in order to more evenly distribute the cooling medium to the 2 or more sub-passageways.

Said passageway comprises preferably a cooling medium inlet manifold opening, a cooling medium outlet manifold opening, 2 or more cooling medium flow channels, a cooling medium supply piping and/or a cooling medium exhaust piping.

Particularly, said cooling medium inlet manifold opening may serve as said branch.

Furthermore, said cooling medium flow channels may serve as said sub-passageways.

According to a most preferred embodiment, 2 sub-passageways are provided in different elements of the fuel cell. Considering the above effect of more evenly distributing the cooling medium to the 2 sub-passageways, what is achieved is that said 2 different elements of the fuel cell can be cooled evenly resulting in a quite constant temperature throughout the fuel cell.

At least one of said elements is preferably a separator plate, although the sub-passageways can also be provided in other elements of the fuel cell.

Said cooling medium is preferably water.

Finally, the invention is also applicable to a stack of 2 or more fuel cells as described above.

In order to achieve the above purpose, a polymer electrolyte fuel cell according to a preferred embodiment of this invention has: a MEA having an anode and a cathode, between which a hydrogen ion conductive polymer electrolyte membrane and the aforementioned polymer electrolyte membrane are sandwiched; a plate-like anode side separator, that is placed at one side of the aforementioned MEA so that the front surface comes in contact with the aforementioned anode, on which fuel gas passageways in which fuel gas flow on the aforementioned front surface, are formed; cells, that are placed at the other side of the aforementioned MEA so that the front surface comes in contact with the aforementioned cathode, having a plate-like cathode side separator, on which oxidizing gas passageways, through which oxidizing gas flows to the aforementioned front surface, are formed; a cell stack comprising multiple of the aforementioned cells layered; and cooling water flow channels, formed on at least one of back surfaces of the aforementioned anode side separator and cathode side separator of at least predetermined cells of the aforementioned cell stack, through which cooling water flows; and wherein, the aforementioned fuel gas, the aforementioned oxidizing gas, and the aforementioned cooling water flow through the aforementioned fuel gas passageways, the aforementioned oxidizing gas passageways, and the aforementioned cooling water flow channels respectively in the direction of gravitational force. Yet, fuel gas, oxidizing gas and cooling water can flow in the direction of gravitational force.

The aforementioned fuel gas passageways, the aforementioned oxidizing gas passageways, and the aforementioned cooling water flow channels can also be formed in horizontal or downslope toward the downstream respectively.

Also, at least either one of the aforementioned fuel gas passageways, the aforementioned oxidizing gas passageways, and the aforementioned cooling water flow channels can substantially consist of a horizontal part and a vertical part.

In the aforementioned cathode side separator, the upstream portion of the aforementioned oxidizing gas passageways can be positioned in the proximity of the inlet of the aforementioned cooling water flow channels.

In the aforementioned anode side separator, the upstream portion of the aforementioned fuel gas passageways can be positioned in the proximity of the inlet of the aforementioned cooling water flow channels.

In the aforementioned anode side separator, viewing from the through-thickness direction, the aforementioned cooling water flow channels and the aforementioned fuel gas passageways can be formed overlapping each other.

In the aforementioned cathode side separator, viewing from the through-thickness direction, the aforementioned cooling water flow channels and the aforementioned oxidizing gas passageways can be formed overlapping each other.

In the aforementioned anode side separator or the aforementioned cathode side separator, an inlet manifold opening that supplies cooling water to the aforementioned cooling water flow channels can be provided to pass through the aforementioned separator in the through-thickness direction and to have an aperture comprising a localized approach portion of a facing inner circumference surface, the first part positioned at one side of the aforementioned aperture can be in communication with a cooling water supply piping, and the second part positioned at the other side of the aforementioned aperture can be in communication with the aforementioned cooling water flow channels.

In the aforementioned anode side separator or the aforementioned cathode side separator, an inlet manifold opening that supplies cooling water to the aforementioned cooling water flow channels can be provided to pass through the aforementioned separator in the through-thickness direction and to have a level difference in the circumferential direction at the lower part of an inner circumference surface, and the first part positioned below the aforementioned level difference can be in communication with cooling water supply piping, and the second part positioned above the aforementioned level difference can be in communication with the aforementioned cooling water flow channels.

The above described purpose, other purposes, features, and advantages of this invention will become clearer from the detailed explanation of the following preferred embodiment given with reference to attached drawings.

### BRIEF EXPLANATION OF DRAWINGS

Fig. 1 is a front view of a cathode side separator used for the fuel cell of the embodiment 1 of the invention.

Fig. 2 is a back view of a cathode side separator of the same.

Fig. 3 is a front view of an anode side separator used for the fuel cell of the embodiment 1 of the invention.

Fig. 4 is a back view of an anode side separator of the same.

Fig. 5 is a back view of an anode side separator used for the fuel cell of the embodiment 2 of the invention.

Fig. 6 is a back view of an anode side separator used for the fuel cell of the embodiment 3 of the invention.

Fig. 7 is an illustration showing current voltage characteristics of the fuel cell of example 1 and comparative example 1 of this invention.

Fig. 8 is an illustration showing the correlation between the cell numbers of the fuel cell of example 1 and example 2, and cell voltages.

Fig. 9 is an illustration showing the correlation between the cell numbers of the fuel cell of example 1 and example 2 after durability test and cell voltages.

Fig. 10 is an illustration showing the correlation between the cell numbers of the fuel cell of example 2 and example 3, and cell voltages.

Fig. 11 is an illustration showing the correlation between the cell numbers of the fuel cell of example 2 and example 3 after durability test and cell voltages.

Fig. 12 is a perspective illustration showing the construction in outline of a polymer electrolyte fuel cell according to embodiment 1 of this invention.

Fig. 13 shows a cross-section drawing along XIII-XIII cutting plane of Fig. 12.

### THE DETAILED EXPLANATION OF PREFERRED EMBODIMENTS (THE CONCEPT OF THE INVENTION)

Firstly, the concept of this invention is explained. The inventors of this invention have found that the smooth emission of flocculated water can be promoted, that the toughness against flooding phenomenon can be reinforced, that the development of the electrolyte membrane dryness can be suppressed, and that fuel cell durability can be improved, by ensuring the oxidizing gas, fuel gas and cooling water in the in-plane parallel to the extending plane of electrodes to flow in the direction of gravitational force. The first viewpoint of this invention is based on this finding.

Moreover, according to the second viewpoint of this invention, the distributability of cooling water can be ensured by providing an aperture and a level difference at a cooling water inlet manifold opening.

In order to increase the merchantability of a fuel cell generation system, it would be desirable that fuel cell load can be changed according to power requirements without reducing power generation efficiency. In order to do so, when load is increased against rated output power, the flow volume of fuel gas and oxidizing gas should be increased to the appropriate flow volume, and when load is reduced against rated output power, the flow volume of fuel gas and oxidizing gas should be reduced to the appropriate flow volume.

Generally, gas passageways provided on a conductive separator used for a fuel cell is designed to provide the most adequate gas flow rate at rated output power. Accordingly, when electric power load is increased, the gas flow rate in passageways increases according to the increase in gas flow volume, and when electric power load is reduced, the gas flow rate in passageways declines according to the decrease in gas flow volume. In the event when the gas flow rate in the passageways increases, while power generation efficiency is somewhat decreased by the increase of auxiliary machine power due to the increase in the pressure loss of supply gas, condensation water and produced water in the gas passageways on separators are rather efficiently removable because of the increase in the gas flow rate in the passageways, eliminating the flooding phenomenon development.

However, when electric power load is reduced, the gas flow rate in the passageways is also reduced according to the decrease in gas flow volume. When the gas flow rate in the passageways decreased, depending on the extent of the decrease in a gas flow rate, it would become difficult to efficiently remove condensation water and produced water in gas passageways on separators, developing the flooding phenomenon. At this time, in spite of reduced electric power load, unless otherwise the flow volume of supply gas is reduced, the proportion of auxiliary machine power against power generation output becomes relatively large, and thus the power generation efficiency of total power generation system decreases. Moreover, in order to maintain fuel cell temperature constant, the flow volume of cooling water should also be changed according to the increase and the decrease in electric power load, and in particular, when the flow volume of cooling water is reduced during low load condition, the isostery of cooling water can be lost.

This invention promotes the smooth emission of flocculated water to prevent a flooding, eliminates the dryness of an electrolyte membrane at the gas inlet part, and improves durability, by ensuring that all the flows in oxidizing gas passageways, fuel gas passageways and cooling water flow channels flow in the direction of gravitational force. For example, when the ratio between the maximum load power generation output and the minimum load power generation output is set as 4 : 1, and the gas volume is reduced while maintaining the gas utilization rate constant, the flow rate also decreases to 1/4. With a conventional separator, when a gas flow rate decreases, flocculated water could no longer be emitted against the direction of gravitational force, developing flooding phenomenon. Correspondingly, in this invention, it has been found that because of oxidizing gas and fuel gas flowing constantly in the direction of gravitational force, the smooth emission of flocculated water could be achieved and the flooding problem could be eliminated. Moreover, viewing from the through-thickness direction of a separator, it has also been found that since the dryness of an electrolyte membrane could be eliminated by bringing a gas inlet part of the lowest relative humidity and the inlet part of cooling water together, durability could also be improved.

Furthermore, it has been found that the isostery of cooling water can be improved when the cooling water is distributed into multiple cooling water flow channels in a cell stack, by providing an aperture at a cooling water inlet manifold opening, cooling water supplied to a cell stack. Furthermore, it has been found that the isostery can be ensured even when the flow volume of cooling water is reduced enabling more stable operation by positioning the inlet of each flow channel which distributes cooling water from a cooling water inlet manifold opening into each flow channel at higher position in the direction of gravitational force than a position from which cooling water is supplied to a cooling water inlet manifold opening.

Hereinafter, embodiments of this invention are explained referring to the drawings.

### (Embodiment 1)

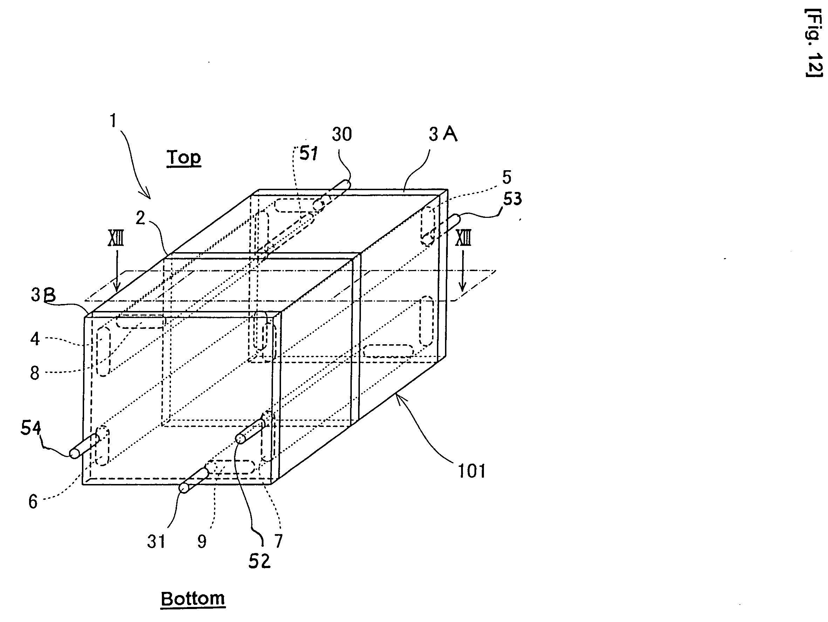

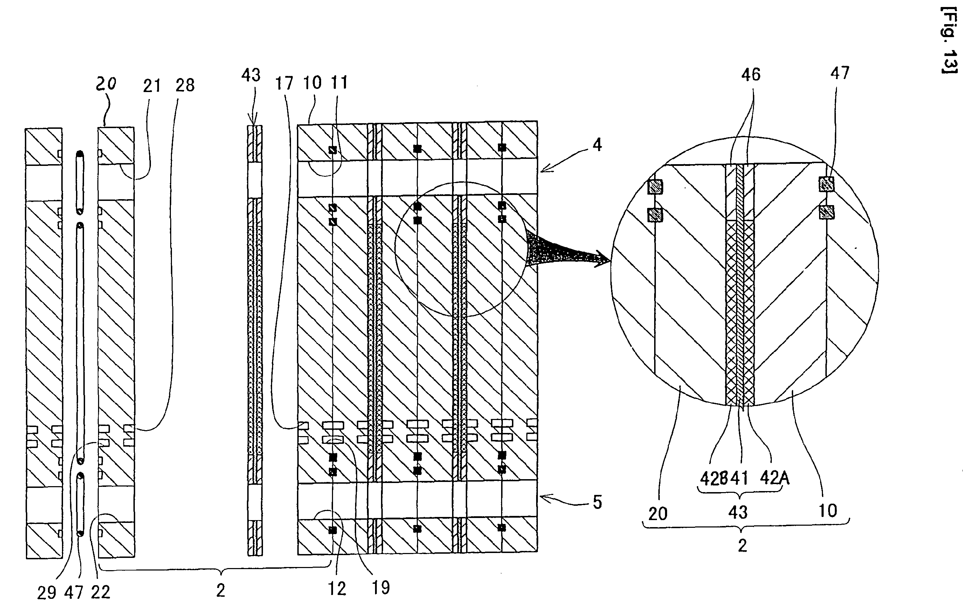

Fig. 12 is a perspective illustration showing the construction in outline of a polymer electrolyte fuel cell (Hereinafter simply referred to as a fuel cell) according to the embodiment 1 of this invention, and Fig. 13 shows a cross-section drawing along XIII-XIII cutting plane of Fig. 12.

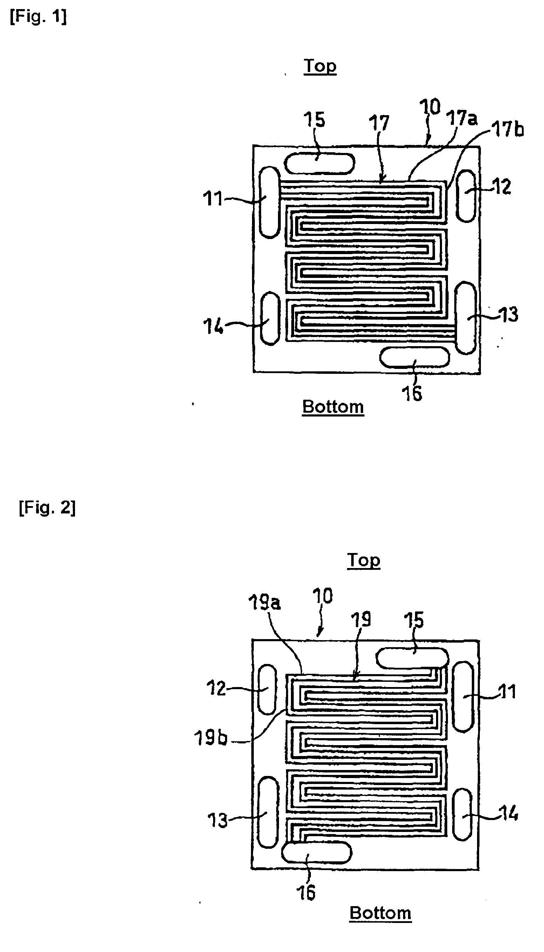

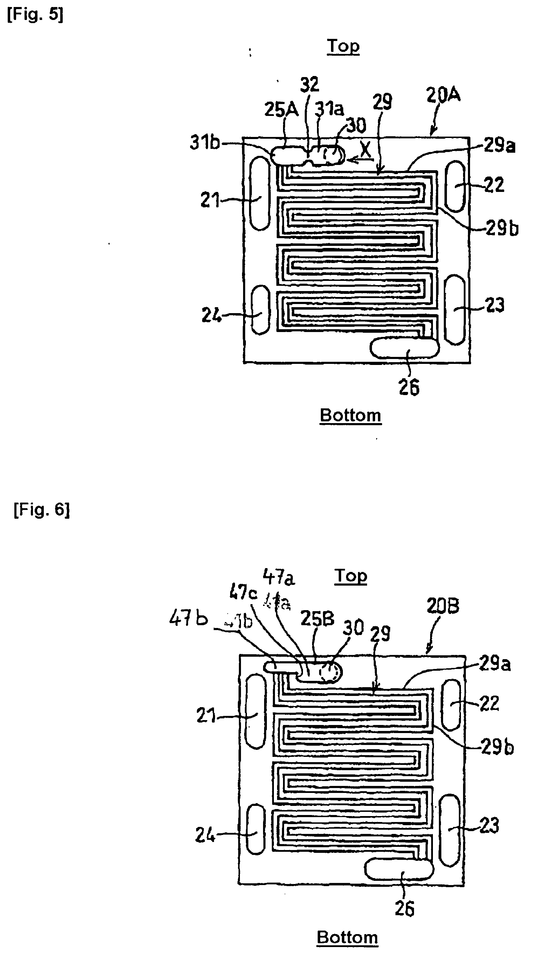

In Fig. 12, the vertical direction of fuel cell is used as the vertical direction of the drawing. In addition, the same also applies to Fig. 1 and Fig. 6 discussed below. As shown in Fig. 12, a fuel cell of this embodiment has a cell stack.

A cell stack consists of: a cell-layered product 101 having cells 2 of a plate-like whole shape stacked in the through-thickness direction; the first and second end plates, 3A and 3B respectively placed at both ends of the cell-layered product 101; and a fixing device (not illustrated) that fixes the cell-layered product 2 and the first and second end plates, 3A and 3B respectively in the stack direction of the cells 2. Moreover, collecting terminals are arranged for the first and second end plates, 3A and 3B respectively, however the drawing is omitted.

The plate-like cells 2 extend parallel to the vertical surface, accordingly, the stack direction of the cells 2 is in the horizontal direction.

At the upper part of one side portion of the cell-layered product 101 (hereinafter referred to as the first side portion), an oxidizing gas supply manifold 4 is formed to pass through said cell-layered product 101 in the stack direction . One end of the oxidizing gas supply manifold 4 is in communication with a through-hole formed on the first end plate 3A, and an oxidizing gas supply piping 51 is connected to this through-hole. The other end of the oxidizing gas supply manifold 4 is closed by the second end plate 3B. Moreover, at the lower part of the other side portion of the cell-layered product 101 (hereinafter referred to as the second side portion), an oxidizing gas emission manifold 7 is formed to pass through said cell-layered product 101 in the stack direction. One end of the oxidizing gas supply manifold 7 is closed by the first end plate 3A. The other end of the oxidizing gas emission manifold 7 is in communication with a through-hole formed on the second end plate 3B, and an oxidizing gas emission piping 52 is connected to this through-hole.

At the upper part of the second side portion of the cell-layered product 101, a fuel gas supply manifold 5 is formed to pass through said cell-layered product 101 in the stack direction. One end of the fuel gas supply manifold 5 is in communication with a through-hole formed on the first end plate 3A, and a fuel gas supply piping 53 is connected to this through-hole.

The other end of the fuel gas supply manifold 5 is closed by the second end plate 3B. Moreover, at the lower part of the first side portion of the cell-layered product 101, a fuel gas emission manifold 6 is formed to pass through said cell-layered product 101 in the stack direction. One end of the fuel gas emission manifold 6 is closed by the first end plate 3A. The other end of the fuel gas emission manifold 6 is in communication with a through-hole formed on the second end plate 3B, and a fuel gas emission piping 54 is connected to this through-hole.

On the inner side of the upper part of the oxidizing gas supply manifold 4, a cooling water supply manifold 8 is formed to pass through the cell-layered product 101 in the stack direction. One end of the cooling water supply manifold 8 is in communication with a through-hole formed on the first end plate 3A, and a cooling water supply piping 30 is connected to this through-hole.

The other end of the cooling water supply manifold 8 is closed by the second end plate 3B. Moreover, on the inner side of the lower part of the oxidizing gas emission manifold 4, a cooling water emission manifold 9 is formed to pass through the cell-layered product 101 in the stack direction. One end of the cooling water emission manifold 9 is closed by the first end plate 3A. The other end of the cooling water emission manifold 9 is in communication with a through-hole formed on the second end plate 3B, and a cooling water emission piping 31 is connected to this through-hole. The cooling water supply manifold 8 and the cooling water emission manifold 9 here both have a shape of cross section of a horizontally long slot shape (a shape of the oblong with the straight lines of the opposing two sides being replaced by the two sides of a half circle).

As shown in Fig. 13, the cells 2 consist of a plate-like MEA 43, and a cathode side separator 10 and an anode side separator 20 positioned to come in contact with both principal planes of MA43. In addition, in adjacent cells 2, 2, the cells 2 are stacked so that one side of the back surface of the cathode side separator 10 of the cells 2 and the other side of the back surface of the anode side separator 20 of the cells 2 come in contact with each other. The MEA 43 , the cathode side separator 10, and the anode side separator 20 are formed in the same size and shape (an oblong shape here). In addition, the inlet manifold hole of an oxidizing medium, the outlet manifold opening of an oxidizing medium, the inlet manifold opening of fuel, the outlet manifold opening of fuel, the inlet manifold opening of cooling water, and the outlet manifold opening of cooling water, that pass through these in the through-thickness direction, are formed at given corresponding locations respectively on the MEA 43, the cathode side separator 10, and the anode side separator 20; and the outlet manifold opening of an oxidizing medium, the inlet manifold opening of fuel, the outlet manifold opening of fuel, the inlet manifold opening of cooling water, and the outlet manifold opening of cooling water of the MEA 43, the cathode side separator 10, and the anode side separator 20 in all the cells 2, the inlet manifold opening of an oxidizing medium are joined respectively to form the oxidizer supply manifold 4 , the oxidizer emission manifold 7, the fuel supply manifold 5, the fuel exhaust manifold 6, the cooling water supply manifold 8, and the cooling water emission manifold 9 respectively.

Oxidizing gas passageways 17 and cooling water flow channels 19 are formed respectively on the front surface and back surface of the cathode side separator 10. The oxidizing gas passageways 17, as discussed hereinafter, are formed for the inlet manifold opening of oxidizing gas and outlet manifold opening of oxidizing gas to communicate with each other, and the cooling water flow channels 19, as discussed hereinafter, are formed for the inlet manifold opening of cooling water and the outlet manifold opening of cooling water to communicate with each other. In addition, the cathode side separator 10 is placed for the front surface to come in contact with the MEA 43.

Fuel gas passageways 28 and the cooling water flow channels 29 are formed on the front surface and back surface of the anode side separator 20 respectively. Fuel gas passageways 19, as discussed hereinafter, are formed for the inlet manifold opening of fuel gas and the outlet manifold opening of fuel gas to communicate with each other, and the cooling water flow channels 29, as discussed hereinafter, are formed for the inlet manifold opening of cooling water and the outlet manifold opening of cooling water to communicate with each other. In addition, the anode side separator 20 is placed for the front surface to come in contact with the MEA 43.

Flow channels 17, 19, 28, and 29 consist of grooves formed on the principal plane of the cathode side separator 10 or the anode side separator 20. Moreover, flow channels 17, 19, 28, and 29 consist of two flow channels in Fig. 13 respectively, however can consist of only one or a large number of flow channels.

Moreover, the cooling water flow channels 19 of adjacent cathode side separator 10 and the cooling water flow channels 29 of the anode side separator 20 are formed to joint together (butt) when the cells 2 are stacked, by both of which one cooling water flow channel is formed.

Moreover, grooves that accommodate O-rings are formed on the back surface of the cathode side separator 10 and the back surface of the anode side separator 20 to surround the inlet manifold opening and outlet manifold opening of cooling water as well as cooling water flow channels, the inlet manifold opening of an oxidizing medium, the outlet manifold opening of an oxidizing medium, the inlet manifold opening of fuel, and the outlet manifold opening of fuel respectively, and an O-ring 47 is placed in one of the grooves. Herewith, the aforementioned manifold openings etc. are sealed respectively.

The MEA 43 has a polymer electrolyte membrane 41, a cathode 42A, an anode 42B, and a pair of gaskets 46. In addition, the cathode 42A and the anode 42B are respectively formed on both sides of the polymer electrolyte membrane 41 excluding the edge portion thereof, and the gasket 46 is placed on both sides of the edge of the polymer electrolyte membrane 41 to surround the cathode 42A and the anode 42B respectively. A pair of the gaskets 46, the cathode 42A, the anode 42B, and the polymer electrolyte membrane 41 are respectively combined together.

Moreover, the area in which the cathode 42A, the anode 42B, the oxidizing gas passageways 17 in the cathode side separator 10 are formed, the area in which the cooling water flow channels 19 are formed, the area in which the fuel gas passageways 28 in the anode side separator 20 are formed and the area in which the cooling water flow channels 29 are formed, viewing from the cells 2 stack direction, are arranged respectively to substantially and totally overlap each other.

Next, cathode side separators and anode side separators are explained in details.

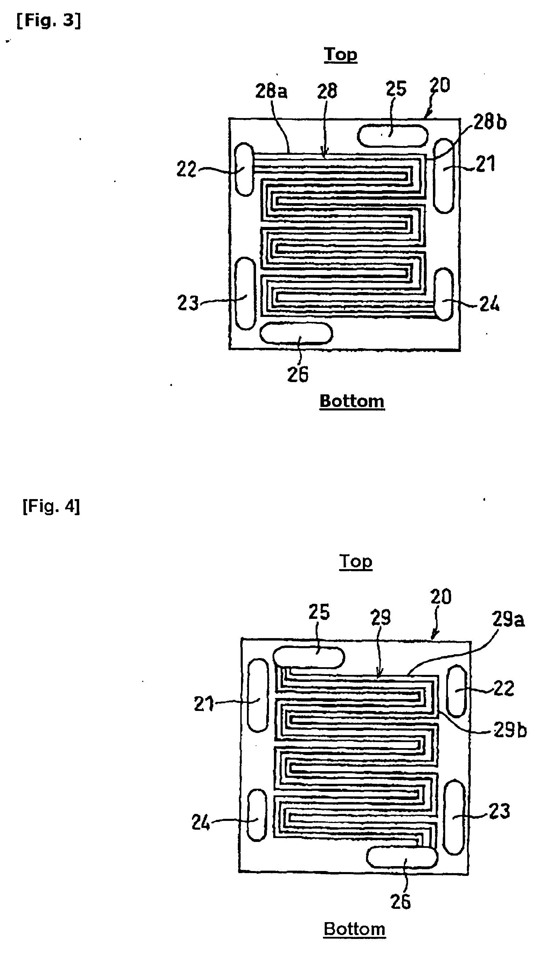

Fig. 1 is a front view of a cathode side separator, Fig. 2 is a back view thereof, Fig. 3 is a front view of an anode side separator, and Fig. 4 is a back view thereof.

As shown in Fig. 1, a cathode side separator 10 has the inlet manifold opening 11 and outlet manifold opening 13 of oxidizing gas, the inlet manifold opening 12 and outlet manifold opening 14 of fuel gas, and the inlet manifold opening 15 and outlet manifold opening 16 of cooling water. The separator 10 also has gas passageways 17 connecting manifold openings 11 and 13 on the surface facing a cathode, and flow channels 19 connecting the manifold openings 15 and 16 of cooling water on the back surface.

In Fig. 1, the inlet manifold opening 11 of oxidizing gas is provided at the upper part of one side of the separator 10 (left side part of the drawing: hereinafter referred to as the first side portion), the outlet manifold opening 13 is provided at the lower part of the other side of separator 10 (right side part of the drawing: hereinafter referred to as the second side portion). The inlet manifold opening of fuel gas 12 is provided at the upper part of the second side portion of the separator 10, and the outlet manifold opening 14 is provided at the lower part of the first side portion of the separator 10. The inlet manifold opening of cooling water 15 is provided at the inner side of the upper part of the inlet manifold opening 11 of oxidizing gas, and the outlet manifold opening 16 is provided at the inner side of the lower part of the outlet manifold opening 13 of oxidizing gas. Cooling water manifold openings 15 and 16 are formed in horizontally long slot shape.

The oxidizing gas passageways 17 consist of 2 flow channels in this embodiment. Naturally, the passageways 17 can consist of any number of flow channels. Each flow channel substantially consists of horizontally extending horizontal portion 17a and vertically extending vertical portion 17b. In particular, each flow channel of the oxidizing gas passageways 17 horizontally extends from the upper part of the inlet manifold opening 11 of oxidizing gas to the second side portion of the separator 10, wherefrom extends a distance downward, wherefrom horizontally extends to the first side portion of the separator 10, and wherefrom further extends a distance downward. In addition, therefrom, the above described extension pattern is repeated 2 times, then horizontally extends to reach the lower part of the outlet manifold opening 13 of oxidizing gas as the point of arrival. In addition, the horizontally extending part of each flow channel forms a horizontal portion 17a, and the part extending downward forms a vertical portion 17b. Herewith, in the oxidizing gas passageways 17, oxidizing gas flows to pass through and winding through the horizontal portion 17a and the vertical portion 17b alternatively in the direction of gravitational force, and as a result, flooding is suppressed.

Yet, each flow channel herewith consists of the horizontal portion 17a and the vertical portion 17b, the flow channel can be formed in horizontal or downslope (includes a vertical direction) in the direction of gas conduction. However, when each flow channel is constituted with the horizontal portion 17a and the vertical portion 17b, the oxidizing gas passageways 17 can be formed with higher density.

In Fig. 2, the cooling water flow channels 19 consist of 2 flow channels. Each flow channel substantially consists of horizontally extending horizontal portion 19a and vertically extending vertical portion 19b. In particular, the cooling water flow channels 19 extend a distance downward from the end closer to the inlet manifold opening 11 of oxidizing gas of the inlet manifold opening 15 of cooling water, wherefrom horizontally extend to the second side portion of the separator 10 (left side part of the drawing), wherefrom extend a distance downward, and wherefrom horizontally extend to the first side portion (right side part of the drawing). In addition, therefrom, the above described extension pattern is repeated 2.5 times, then further extend downward to reach the end of the outlet manifold opening 16 of cooling water closer to the outlet manifold opening 13 of oxidizing gas as the point of arrival. In addition, the horizontally extending part of each flow channel forms a horizontal portion 19a, and the part extending downward forms a vertical portion 19b. Herewith, in the cooling water flow channels 19, cooling water flows to pass through and winding through the horizontal portion 19a and the vertical portion 19b alternatively in the direction of gravitational force.

In addition, what is important here is the following aspect. That is: the inlet manifold opening of cooling water 15 and the inlet manifold opening 11 of oxidizing gas are provided in close proximity; the outlet manifold opening of cooling water 16 and the outlet manifold opening 13 of oxidizing gas are provided in close proximity; and viewing the through-thickness direction of the separator 10, a cooling water flow channel 19 is formed to substantially overlap with the oxidizing gas passageways 17; and as a result, cooling water and oxidizing gas sandwiching the separator 10 substantially flow in the same direction. By constituting a fuel cell as described above, viewing from the through-thickness direction of a separator, the gas inlet part of the lowest relative humidity and the inlet part of cooling water are nearly matched together, and thus the dryness of a polymer electrolyte membrane can be eliminated and therefore the durability of a polymer electrolyte membrane can also be improved.

Yet, each flow channel herewith substantially consists of the horizontal portion 19a and the vertical portion 19b, the flow channel can be formed in horizontal or downslope in the direction of cooling water conduction. However, when each flow channel is constituted with the horizontal portion 19a and the vertical portion 19b, the cooling water flow channel 19 can be formed with higher density.

An anode side separator 20 has the inlet manifold opening 21 and outlet manifold opening 23 of oxidizing gas, the inlet manifold opening 22 and outlet manifold opening 24 of fuel gas, and the inlet manifold opening 25 and outlet manifold opening 26 of cooling water. A separator 20 also has gas passageways 28 connecting manifold openings 22 and 24 on the surface facing an anode, and flow channels 29 connecting the manifold openings 25 and 26 of cooling water on the back surface.

In Fig. 3, the inlet manifold opening 21 of oxidizing gas is provided at the upper part of one side of the separator 20 (right side part of the drawing: hereinafter referred to as the first side portion), the outlet manifold opening 23 is provided at the lower part of the other side of separator 20 (left side part of the drawing: hereinafter referred to as the second side portion). The inlet manifold opening of fuel gas 22 is provided at the upper part of the second side portion of the separator 20, and the outlet manifold opening 24 is provided at the lower part of the first side portion of the separator 20. The inlet manifold opening of cooling water 25 is provided at the inner side of the upper part of the inlet manifold opening 21 of oxidizing gas, and the outlet manifold opening 26 is provided at the inner side of the lower part of the outlet manifold opening 23 of an oxidizing medium. Cooling water manifold openings 25 and 26 are formed in horizontally long slot shape.

As for the fuel gas passageways 28, each flow channel consisting of 2 flow channels in this embodiment, substantially consists of horizontally extending horizontal portion 28a and vertically extending vertical portion 28b. In particular, each flow channel of the fuel gas passageways 28 horizontally extends from the upper part of the inlet manifold opening 22 of fuel gas to the first side portion of the separator 20, wherefrom extends a distance downward, wherefrom horizontally extends to the second side portion of the separator 20, wherefrom further extends a distance downward. In addition, therefrom, the above described extension pattern is repeated 2 times, then horizontally extends to reach the lower part of the outlet manifold opening 24 of fuel gas as the point of arrival. In addition, the horizontally extending part of each flow channel forms a horizontal portion 28a, and the part extending downward forms a vertical portion 28b.

Herewith, in the fuel gas passageways 28, fuel gas flows to pass through and winding through the horizontal portion 28a and the vertical portion 28b alternatively in the direction of gravitational force, and as a result, flooding is suppressed.

Yet, each flow channel herewith substantially consists of the horizontal portion 28a and the vertical portion 28b, the flow channel can be formed in horizontal or downslope (includes a vertical direction) in the direction of gas conduction. However, when each flow channel is constituted with the horizontal portion 28a and the vertical portion 28b, the fuel gas passageways 28 can be formed with higher density.

In Fig. 4, the cooling water flow channels 29 is formed to have a mirror image of the cooling water flow channels 19 formed on the back surface of the cathode separator 10 of Fig. 2 of the drawings. In other words, each flow channel substantively consists of horizontally extending horizontal portion 29a and vertically extending vertical portion 29b.

In particular, the cooling water flow channels 29 extend a distance downward from the end closer to the inlet manifold opening 21 of oxidizing gas of the inlet manifold opening 25 of cooling water, wherefrom horizontally extend to the second side portion of the separator 20 (right side part of the drawing), wherefrom extend a distance downward, and wherefrom horizontally extend to the first side portion (left side part of the drawing). In addition, therefrom, the above described extension pattern is repeated 2.5 times, then further extend downward to reach the end of the outlet manifold opening 26 of cooling water closer to the outlet manifold opening 23 of oxidizing gas as the point of arrival. In addition, the horizontally extending part of each flow channel forms a horizontal portion 29a, and the part extending downward forms a vertical portion 29b. Herewith, in the cooling water flow channels 29, cooling water flows to pass through and winding through the horizontal portion 29a and the vertical portion 29b alternatively in the direction of gravitational force.

In addition, crucial point here is the following aspect. That is, the inlet manifold opening 25 of cooling water and the inlet manifold opening of fuel gas 22 are both provided on the upper part of the separator 20; the outlet manifold opening of cooling water 26 and the outlet manifold opening of fuel gas 24 are both provided on the lower part of the separator 20; and viewing from the through-thickness direction of the separator 20, the cooling water flow channels 29 are formed to substantially overlap with the fuel gas passageways 28, as a result, while cooling water horizontally flows in the opposite direction from that of oxidizing gas across the separator 20, from the aspect of horizontal direction as a whole, however, both of them flow in the direction of gravitational force. By constituting a fuel cell as described above, the upstream portion of the fuel gas passageways 28 having the lowest relative humidity is positioned at the upper part having the lowest temperature in the vertical direction of the separator 20 where the inlet part of cooling water is provided, contributing to the elimination of the dryness of a polymer electrolyte membrane, and consequently contributing to the improvement of the durability of a polymer electrolyte membrane.

Yet, each flow channel herewith substantively consists of the horizontal portion 29a and the vertical portion 29b, the flow channel can be formed in horizontal or downslope in the direction of cooling water conduction. However, when each flow channel is constituted with the horizontal portion 29a and the vertical portion 29b, the cooling water flow channel 29 can be formed with higher density.

As previously described, a cell consists of a MEA sandwiched in between the above described cathode side separator 10 and an anode side separator 20. Accordingly, the cathode side separator 10 and anode side separator 20 are placed between adjacent cells facing to the same direction as those cooling water flow channels 19 and 29, and thus a cooling section is constructed. When a cooling section is provided for every multiple cells, a single separator, one surface of which acts as a cathode side separator, another surface of which acts as an anode side separator, may be used accordingly instead of the aforementioned combined separators.

Next, the operation of the fuel gas, oxidizing gas, and cooling water of a fuel cell constituted as described above, is herewith explained.

In Fig. 1 to 4, 12 and 13, fuel gas is supplied to the fuel gas supply manifold 5 of a cell stack through a fuel gas supply piping 53. This supplied fuel gas flows into the inlet manifold opening 22 of each of the cells 2 from the fuel gas supply manifold 5 and is then conducted through the fuel gas passageways 28. In addition, during this period, fuel gas is consumed by the reaction with oxidizing gas via an anode, a polymer electrolyte membrane, and cathode, and the portion of fuel gas that was not consumed flows out as off-gas from the outlet manifold opening 24 to the fuel gas exhaust manifold 6, and is then emitted from the cell stack through a fuel gas exhaust piping 54.

Meanwhile, oxidizing gas is supplied to the oxidizing gas supply manifold 4 of a cell stack through an oxidizing gas supply piping 51. This supplied oxidizing gas flows into the inlet manifold opening 11 of each of the cells 2 from the oxidizing gas supply manifold 4 and is then conducted through the oxidizing gas passageways 17. In addition, during this period, oxidizing gas is consumed by the reaction with fuel gas via a cathode, a polymer electrolyte membrane, and an anode, and the portion of oxidizing gas that was not consumed flows out from the outlet manifold opening 13 to the oxidizing gas exhaust manifold 7, and is then emitted from the cell stack through an oxidizing gas exhaust piping 52.

Moreover, cooling water is supplied to the cooling water supply manifold 8 of a cell stack through the cooling water supply piping 30. This supplied cooling water flows into the inlet manifold openings 15 and 25 of each of the cells 2 from the cooling water supply manifold 8 and is then conducted through the cooling water flow channels 19 and 29. In addition, during this period, while cooling water cools a cathode and an anode via the cathode separator 10 and anode separator 20, cooling water collects heat and then flows out from the outlet manifold openings 16 and 26 to the cooling water exhaust manifold 9, and is then finally emitted from a cell stack through the cooling water exhaust piping 31.

In addition, during this process, fuel gas and oxidizing gas flow through the fuel gas passageways 28 and the oxidizing gas passageways 17 respectively in the direction of gravitational force, by which flooding is prevented.

Moreover, the upstream portion of the fuel gas passageways 28 or the oxidizing gas passageways 17 where relative humidity is the lowest is located in the proximity of the cooling water inlet in separators 10 and 20, and therefore a polymer electrolyte membrane is protected from developing dryness.

### (Embodiment 2)

Fig. 5 is a back view of an anode side separator 20A of according to the embodiment 2 of the invention. In Fig. 5, the portion in which notations are the same as or equivalent to Fig. 4 is shown.

In this embodiment, the cooling water supply manifold 8 shown in Fig. 12 for the cell stack of embodiment 1 has the same shape of cross section as the inlet manifold opening 25A of cooling water of the anode side separator 20A shown in Fig. 5.

As shown in Fig. 5, the inlet manifold opening 25A of cooling water of the anode side separator 20A is divided into parts 31a and 31b by an aperture 32. In addition, although they are not illustrated, the inlet manifold opening of cooling water of a cathode side separator and MEA are also formed in the same shape as the inlet manifold opening 25A of cooling water of this anode side separator 20A. The first part 31 a of this inlet manifold opening 25A is where the cooling water supplied from the cooling water supply piping 30 to the cooling water supply manifold 8 circulates, and the second part 31 b is where cooling water is supplied to the cooling water flow channels 29. This embodiment, other than this aspect, is the same as embodiment 1.

When referring to Fig. 12 and Fig. 5, in a fuel cell of this embodiment constituted as described above, cooling water is supplied to a portion corresponding to the first part 31 a of the inlet manifold opening 25A, of the cooling water supply manifold 8, from the cooling water supply piping 30. In addition, this supplied cooling water is distributed to each of the cells 2, while flowing in the stack direction of a cell stack. Here, it has been a tendency that more cooling water flows into cells that are closer to the cooling water supply piping 30 due to the gravitational influence if there is no aperture part 32 on the inlet manifold opening 25A. According to this embodiment, cooling water that is supplied to the inlet manifold opening 25A of cooling water by the effect of the aperture 32, is supplied to the flow channels 29 of each of cells 2 through the second part 31 b after it fills the upstream side of the aperture 32 i.e. the inside of the first part 31 a. Consequently, it becomes possible for cooling water to be distributed evenly to all the cells of the cells 2 regardless of distance from the cooling water supply piping 30. Wherein, it is preferable to design the cross-section area in the direction through which the cooling water of the aperture 32 passes, in the range between 1 - 10 times of the total cross-section area of each flow channel of the cooling water flow channels 29.Yet, the direction in which the cooling water of the aperture 32 passes through is in the direction shown by Arrow X in Fig. 5 i.e. the horizontal direction within the extension surface of the cells 2 (by extension of the separator 20A).

### (Embodiment 3)

Fig. 6 is a back view of an anode side separator 20B according to the embodiment 3 of the invention. In Fig. 6, the portion in which notations are the same as or equivalent to Fig. 4 is shown.

In this embodiment, the cooling water supply manifold 8 shown in Fig. 12 for the cell stack of embodiment 1 has the same shape of cross section as the inlet manifold opening 25B of cooling water of the anode side separator 20B shown in Fig. 6.

In this separator 20B, the inlet manifold opening 25B of cooling water has a bottom portion consisting of two different levels i.e. the deep first part 47a and the shallow second part 47b. In other words, the inlet manifold opening 25B has a level difference 47c at the lower part of an inner circumference surface in the circumferential direction, and is formed to have the first part 47a positioned below the level difference 47c and the second part 47b positioned above a level difference 47c. In addition, although they are not illustrated, the inlet manifold opening of cooling water of a cathode side separator and MEA are also formed in the same shape as the inlet manifold opening 25B of cooling water of this anode side separator 20B. In addition, the first part 47a of this inlet manifold opening 25B is where the cooling water supplied from the cooling water supply piping 30 to the cooling water supply manifold 8 circulates, and the second part 47b is where cooling water is supplied to the cooling water flow channels 29.

In the separator 20B, the second part 47b for distributing cooling water from the inlet manifold opening 25B of cooling water to each flow channel is formed at the higher position in the vertical direction than the first part 47a, to which cooling water is supplied from the cooling water supply piping 30. By forming the inlet manifold opening 25 of cooling water B in a shape as described above, cooling water filled in the first part 47a, which is on the upstream side of the second part 47b, increases a flow rate horizontally at the second part 47b within the extension surface of the separator 20B, and the cooling water is distributed to each flow channel maintaining the flow rate, and thus the isostery of cooling water can be improved. Moreover, when it was constituted like embodiment 2, simply providing the aperture 32 at the inlet side of the second part 31 b, there is a risk of the worsen isostery due to the reduced effect of restriction by an aperture, if the flow volume of cooling water is reduced during part load operation. However, according to this embodiment, since the bottom of the second part 47b positioned on the downstream side is shallower than that of the first part 47a positioned on upstream side, even when the flow volume of cooling water is less, the level of isostery can be secured, because cooling water supplied from the cooling water supply piping 30 is collected once at the first part 47a and then flows into the second part 47b that is in communication with each flow channel of the cooling water flow channels 29.

Furthermore, if a foreign object enters into cooling water, this precipitates in the first part 47a, and thus this is prevented from flowing into the flow channels 29, which in turn prevents a clogged drain etc. due to such foreign objects.

### EXAMPLE

Hereinafter, examples according to this invention are explained.

### (Example 1)

Acetylene black system carbon powder (DENKA BLACK FX-85 made by Nihon Denki-Kagaku Co., Ltd.) was used to support platinum particles of mean particle diameter of about 30 A at the support ratio of 25-weight %. This is a cathode catalyst. Moreover, acetylene black system carbon powder (DENKA BLACK FX-35 made by Nihon Denki-Kagaku Co., Ltd.) was used to support platinum-ruthenium alloy particles (Pt : Ru = 1 : 1 (weight ratio)) of mean particle diameter of about 30 Å at the support ratio of 25-weight %. This is an anode catalyst. The ethanol dispersion liquid of perfluorosulfonic acid powder was added to and mixed with the isopropanol dispersion liquid (Flemion FSS-1 made by ASAHI GLASS CO., LTD.) of these catalyst powder and then was turned into a paste. These pastes are used as a raw material to form an electrode catalyst layer on one surface of a carbon non-woven fabric of 250 µm thickness (TGP-H-090 made by Toray Co., Ltd.)employing a screenprinting method. The catalyst layer of electrodes formed as described above contains 0.3 mg/cm² of platinum and 1.2 mg/cm² of perfluorosulfonic acid.

These cathode/anode electrodes share the same constitution with the exception of catalyst materials used. These electrodes are jointed to both sides of the center part of a proton conductive polymer electrolyte membrane (NAFION122 made by U.S. DuPont) having the area slightly larger than electrodes in the way that printed catalyst layers are in contact with the electrolyte membrane side employing a hot press method. Moreover, the peripheral part of the polymer electrolyte membrane that extends out of the outer periphery of electrodes was sandwiched in between gaskets made from a 250 µm thick fluorocarbon rubber (AFLAS (Registered Trade Mark) made by ASAHI GLASS CO., LTD.) sheet and jointed together. Thus, a membrane-electrode assembly (MEA) was produced.

A thin film of 30 µm thickness made from perfluorosulfonic acid was used as a proton conductive polymer electrolyte membrane.

In this example, a conductive separator with the construction shown in embodiment 1 was used.

In the drawing, the upper direction was determined based on the upper direction of gravitational force when the fuel cell in which these separators were stacked is installed for actual operation. Gas passageways and manifold openings were formed on this conductive separator by machining a 3 mm thick isotropic carbon plate. The groove width of gas passageways 17 and 28 was set as 2 mm.

The depth was set as 1 mm and the width between flow channels was set as 1 mm, and a 2-path passageway/flow channel constitution was respectively adopted. The flow channels of cooling water are the same as the gas passageways with the exception of the groove depth being 0.5 mm. Rated operation conditions of this cell are: fuel utilization rate = 75%, oxygen utilization rate = 40%, and current density = 0.3 A/cm².

50 cells consisting of MEAs sandwiched in between cathode side separators and anode side separators as described above are stacked. The flow channels of cooling water are formed by the separator plates between adjacent cells. This cell-layered product was sandwiched in between stainless steel end plates through the intermediary of a copper collecting plate, the surface of which is gold plated and a poly phenylene sulfide insulating plate and then both end plates were tightened together with tightening rods. Tightening torque was determined based on 10 kgf/cm² per electrode. Moreover, a stacked cell was installed with the upper part of the separator shown in the drawing facing upward during operation.

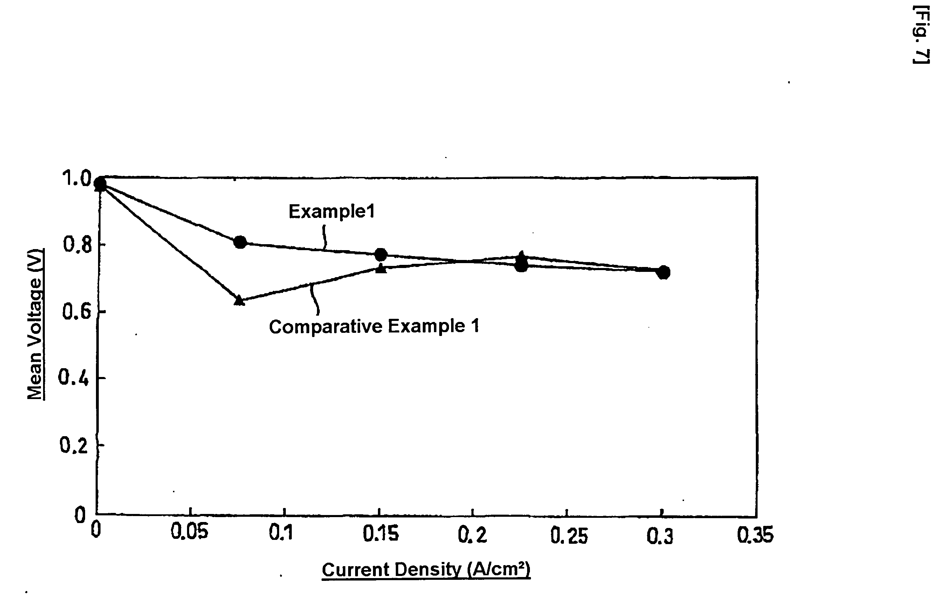

A fuel cell of this example produced as described above was maintained at 70 °C; fuel gas (80% hydrogen gas / 20% carbon dioxide / 10 ppm carbon monoxide) humidified / heated to the dew-point temperature of 70 °C was added to an anode; and air humidified and heated to the dew-point temperature of 70 °C was added to a cathode. The current-voltage characteristics were assessed by changing the current density of this cell from 0.075 A/cm², which yields low load (25% of rated load) to 0.3 A/cm², which yields rated load (100% of rated load). However, the utilization rate used during the test is the same as with rated condition. The result is shown in Fig. 7. In Fig. 7, the fuel cell characteristics of a comparative example are also included. The cooling water inlet and outlet of the fuel cell in the comparative example were reversed from those in example 1, and the gas was humidified to 100% relative humidity at the inlet. According to the illustration, it has been shown that the fuel cell in this example was operatable even in the vicinity of 0.075 A/cm² where the fuel cell in the comparative example developed flooding problem due to the decrease in a gas flow rate causing difficulties to be operated. In this example, cooling sections were provided between the anode side separators and cathode side separators of adjacent cells respectively, however such cooling sections may also be provided for every multiple cells from which the same result can be obtained.

### (Example 2)

In this example, the separator explained in embodiment 2 was employed. The cross-section area in the direction through which the cooling water of the aperture 32 passes, was designed in the range between 1 - 10 times of the total cross-section area of the flow channels of cooling water on each cooling surface. In this example, since the total cross-section area of the 2-flow channels of cooling water is 4 mm², the cross-section area of the aperture 32 was designed in the range between 4 - 40 mm².

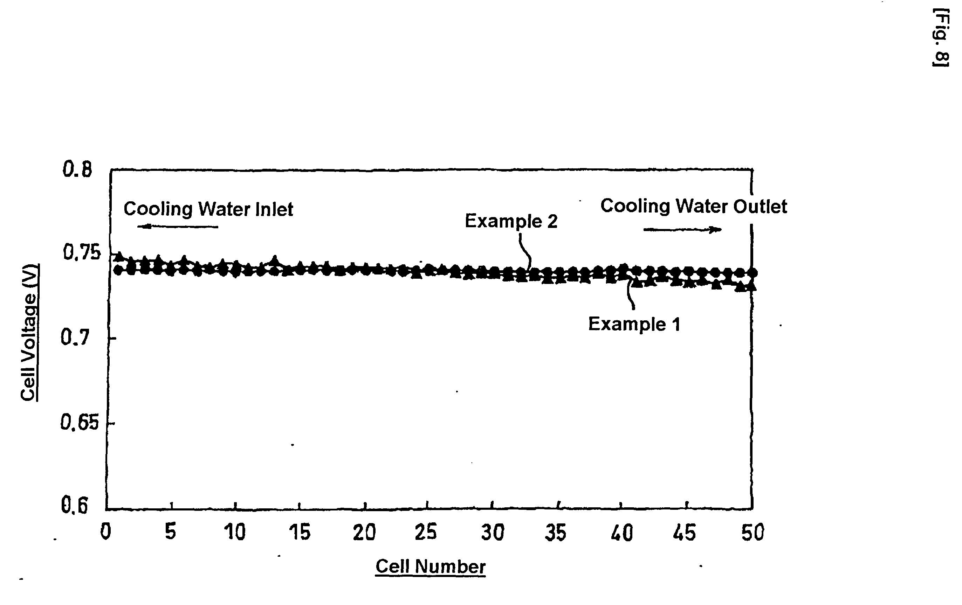

The voltage of each cell during rated load operation was measured under the operating conditions of this fuel cell shown in example 1. This result is shown in Fig. 8. In Fig. 8, the voltage of each cell of the fuel cell of example 1 was also included. Then, cooling water is supplied from cell No. 1 side and is emitted to cell No. 50 side through manifold and cooling water flow channels. It is shown that the voltage of the fuel cell of example 1 is higher at the inlet side of cooling water and decreases as it approaches the outlet. This is due to the nonuniformity of the flow volume of cooling water, which in turn causes high temperature cells and low temperature cells. Correspondingly, with the fuel cell of this example, it has been shown that both temperature distribution and cell voltage have been equalized due to the improved isostery of cooling water.

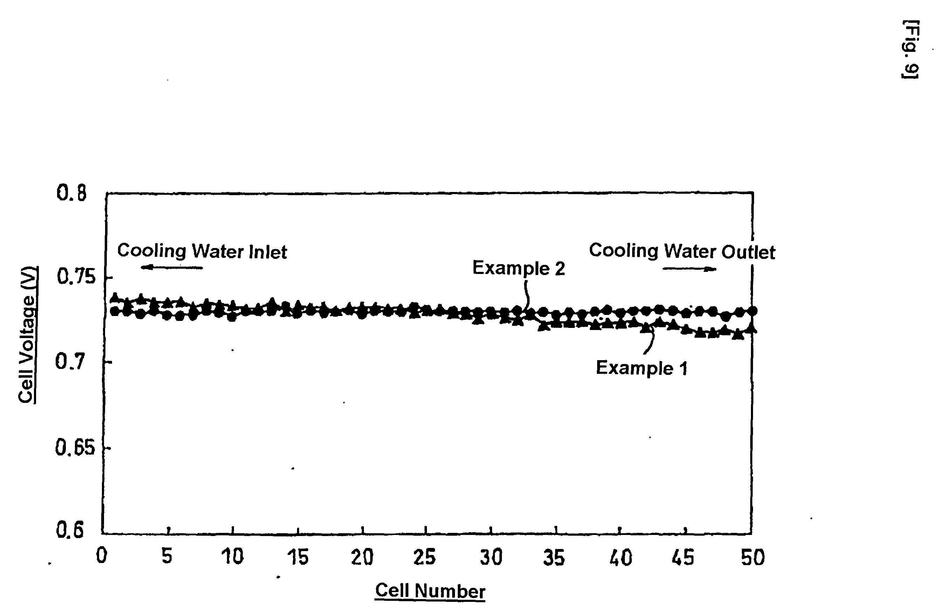

Furthermore, Fig. 9 shows the result of comparison of these fuel cells after 1,000 hours of operation. According to Fig. 9, it has been shown that none of the cells of this example has shown significant degradation, while the cell voltage degradation rate of the cells in example 1 around the outlet of cooling water is significant. The degradation of cell voltage is conceivably due to temperature increase in the cells in which the flow volume of cooling water has decreased causing the degradation by dryness of an electrolyte membrane. Accordingly, The improvement of the isostery of cooling water according to this example has shown to be effective in the suppression of degradation in durability.

### (Example 3)

In this example, the separator according to embodiment 3 was employed. The cross-section area of the aperture at the inlet side of the part 47b that is in communication with the flow channel of the inlet manifold opening 25B was designed by the same method as example 2.

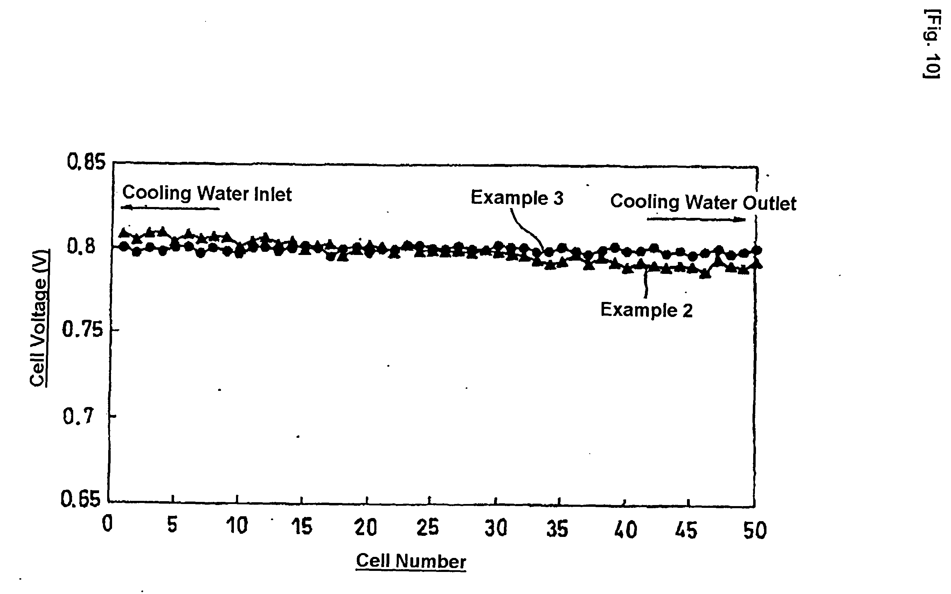

The voltage of each cell during 1/4 load of rated load operation with cooling water reduced down to 1/4 of rated flow volume was measured under the operating conditions of this fuel cell shown in example 1. This result is shown in Fig. 10. In Fig. 10, the voltage of each cell of the fuel cell shown in example 2 was also included. Then, cooling water is supplied from cell No. 1 side and is emitted to cell No. 50 side through manifold and cooling water flow channels. According to Fig. 10, it has been shown that both cells in example 2 and in this example can be operated with stability even during 1/4 load operation. Moreover, the isostery of cooling water of cells according to example 2 has shown to worsen and the voltage fluctuation of each cell has shown to somewhat increase, when the flow volume of cooling water is reduced down to 1/4. Correspondingly, the cell voltage of the cells according to this example has shown to be retained evenly in spite of the decrease in the flow volume of cooling water. This is conceivably due to the improvement of the isostery during the low volume of cooling water made by the process of cooling water being accumulated in the first part 47a on the upstream side in the manifold opening 25B, and then being supplied to the flow channels 29 via the second part 47b on the downstream side.

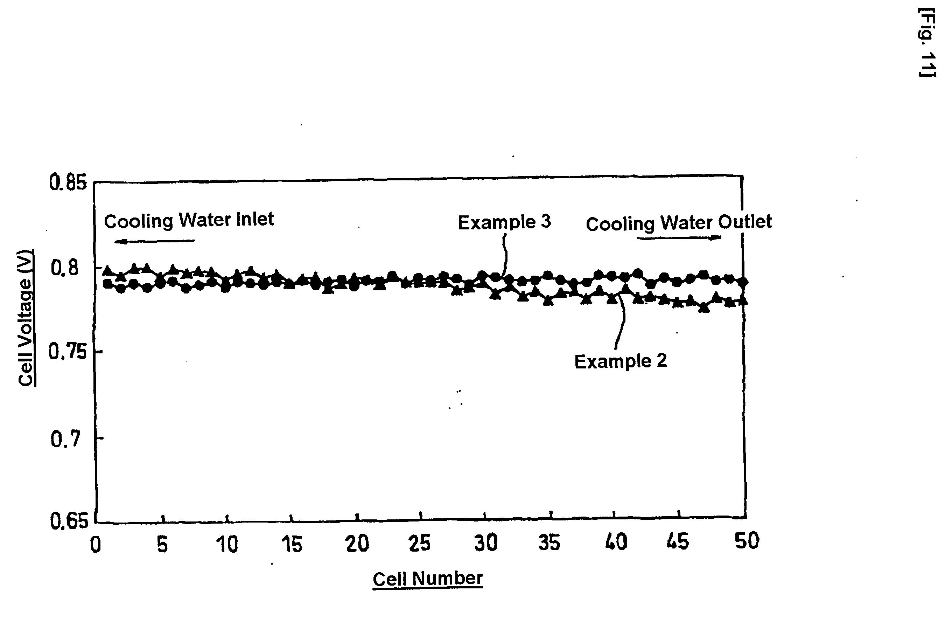

Fig. 11 shows the result of voltage comparison among cells of these stacks after 1,000 hours of operation under low load operation condition. According to Fig. 11, it has been shown that the cell voltage degradation rate of this example was uniform, while the cell voltage degradation rate of the cells in example 2 around the outlet of cooling water is slightly greater. The degradation of cell voltage is conceivably due to temperature increase in the cells in which the flow volume of cooling water has decreased causing the degradation by dryness of an electrolyte membrane. The improvement of the isostery of cooling water according to this example has shown to be effective in the suppression of degradation in durability. It has been shown that the shape of manifold according to this example is effective particularly for the systems that are operated extensively under low load operation with the flow volume of cooling water reduced.

As described above, according to this invention, ensuring all the flows of the oxidizing gas, fuel gas, and the cooling water in the separators in the direction of gravitational force allows the promotion of the smooth emission of flocculated water, the development of no flooding during low load operation, highly efficient stable operation, and the elimination of the dryness of an electrolyte membrane at the gas inlet part, and the improvement of durability.

Moreover, providing an aperture at the inlet manifold opening of cooling water allows the improvement of the isostery of cooling water when stacking cells, the reduction of temperature distribution among cells, and therefore fluctuation of cell voltage can be minimized. Furthermore, no cell with high temperature is developed and therefore degradation in durability can also be reduced.

Furthermore, it has been found that the isostery can be ensured even when the flow volume of cooling water is reduced during low load operation, enabling more stable operation, by positioning the connecting part of communication part that distributes cooling water from a cooling water inlet manifold opening into each flow channel at higher position in the direction of gravitational force than a position from which cooling water is supplied to a cooling water inlet manifold opening and that voltage fluctuation due to the increase in temperature distribution can be suppressed.

According to above descriptions, it will be shown to those skilled in the art that many modifications and other embodiments of this invention can be made. Accordingly, the above description should not be construed as limitations to the scope of this invention, but rather as an exemplification of a preferred embodiment thereof. It will be understood that the invention is capable of substantial modifications of the constitution and/or functions in detail without departing from the spirit of the invention.

## Claims

1. A fuel cell comprising a passageway (25, 26, 29, 30, 31) for a cooling medium, said passageway comprising a cooling medium inlet (25), a cooling medium flow channel (29) and a cooling medium outlet (26),
**characterized in that**
there is no portion of said flow channel (29) having a downstream part higher than an upstream part thereof.

2. The fuel cell according to claim 1, comprising a passageway (11, 13, 17, 4, 7) for an oxidizing gas, said passageway comprising an oxidizing gas inlet (11), an oxidizing gas flow channel (17) and an oxidizing gas outlet (13), **characterized in that** there is no portion of said oxidizing gas flow channel (17) having a downstream part higher than an upstream part thereof.

3. The fuel cell according to claim 1 or 2, comprising a passageway (22, 24, 28, 53, 54) for a fuel gas, said passageway comprising a fuel gas inlet (22), a fuel gas flow channel (28) and a fuel gas outlet (24), **characterized in that** there is no portion of said fuel gas flow channel (28) having a downstream part higher than an upstream part thereof.

4. The fuel cell according to any preceding claim, **characterized in that** at least one of said cooling medium, fuel gas and oxidizing gas flow channels (29, 28, 17) comprises a horizontal portion, a vertical portion and/or a downslope portion.

5. A fuel cell, particularly according to any preceding claim, comprising a passageway (25, 26, 29, 30, 31) for a cooling medium, said passageway being at least partly positioned to overlap a fuel gas passageway (22, 24, 28, 53, 54) and/or an oxidizing gas passageway (11, 13, 17, 4, 7), as seen in the through-thickness direction.

6. The fuel cell according to claim 5, **characterized in that** said cooling medium passageway (25, 26, 29, 30, 31) is designed to at least partially provide a counterflow cooling of said oxidizing gas and/or of said fuel gas with view to the horizontal direction.

7. A fuel cell, particularly according to any preceding claim, comprising a passageway (25, 26, 29, 30, 31) for a cooling medium, **characterized in that** an upstream portion of a fuel gas passageway (22, 24, 28, 53, 54) and/or an upstream portion of an oxidizing gas passageway (11, 13, 17, 4, 7) is positioned in the proximity of an inlet portion (25) of said cooling medium passageway (25, 26, 29, 30, 31).

8. A fuel cell, particularly according to any preceding claim, comprising a passageway (25, 26, 29, 30, 31) for a cooling medium, said passageway comprising a branch (25) for branching into 2 or more sub-passageways (29, 29),
**characterized by**
barrier means (32, 47c) between an upstream portion (31 a, 47a) of said branch (25) and a downstream portion (31 b, 47c) of said branch.

9. The fuel cell according to claim 8, **characterized in that** said barrier means (32, 47c) comprises a bottleneck portion (32).

10. The fuel cell according to claim 8 or 9, **characterized in that** said barrier means (32, 47c) comprises a rib on the bottom between said upstream and downstream portions (31 a, 31 b).

11. The fuel cell according to any of claims 8 to 10, **characterized in that** said downstream portion (47c) is positioned on a higher level than said upstream portion.

12. The fuel cell according to any of claims 8 to 11, **characterized in that** said passageway (25, 26, 29, 30, 31) comprises a cooling medium inlet manifold opening (25), a cooling medium outlet manifold opening (26), 2 or more cooling medium flow channels (29), a cooling medium supply piping (30) and/or a cooling medium exhaust piping (31).

13. The fuel cell according to claim 12, **characterized in that** said cooling medium inlet manifold opening (25) serves as said branch.

14. The fuel cell according to claim 12 or 13, **characterized in that** said cooling medium flow channels (29) serve as said sub-passageways.

15. The fuel cell according to any of claims 8 to 14, **characterized in that** 2 sub-passageways (19, 29) are provided in different elements (10, 20) of the fuel cell.

16. The fuel cell according to claim 15, **characterized in that** at least one of said elements is a separator plate (10, 20).

17. The fuel cell according to any preceding claim, **characterized in that** said cooling medium is water.

18. A stack of 2 or more fuel cells according to any preceding claim.
